(19) **Europäisches Patentamt / European Patent Office / Office européen des brevets**

(11) **EP 4 186 578 A1**

(12) **EUROPEAN PATENT APPLICATION**

(43) Date of publication:
31.05.2023 Bulletin 2023/22

(21) Application number: 22209711.5

(22) Date of filing: 25.11.2022

(51) International Patent Classification (IPC):
$B01D\ 39/20^{(2006.01)}$    $B01D\ 46/00^{(2022.01)}$
$F24F\ 8/108^{(2021.01)}$    $F24F\ 8/158^{(2021.01)}$
$B01J\ 20/20^{(2006.01)}$    $B01J\ 20/28^{(2006.01)}$
$B01J\ 20/30^{(2006.01)}$

(52) Cooperative Patent Classification (CPC):
**B01D 39/2065; B01J 20/205; B01J 20/28023;**
**B01J 20/2803; B01J 20/3042; F24F 8/108;**
B01D 39/1607; B01D 46/0028; B01D 2239/025;
B01D 2239/0258; B01D 2239/0442;
B01D 2239/0613; B01D 2239/0618;
B01D 2239/0631; B01D 2239/0654;    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: 26.11.2021 IT 202100030029

(71) Applicant: **Clustervibe Oü**
**74626 Pudisoo Kula (EE)**

(72) Inventor: **CAPODICASA, Alessandro**
**96100 Siracusa (IT)**

(74) Representative: **Braidotti, Andrea**
**Praxi Intellectual Property S.p.a**
**Corso Porta Nuova, 60**
**37122 Verona (IT)**

(54) **FILTERING DEVICE**

(57) Filtering device (1), in particular for an air flow, comprising a first layer (2) comprising in turn fibers (4) of carbon-based material, and characterized in that said fibers comprise nanoclusters of material carbon-based having a face-centered cubic (*fcc*) type structure.

FIG. 5

**(Cont. next page)**

(52) Cooperative Patent Classification (CPC): (Cont.)
B01D 2239/0681; B01D 2239/086;
B01D 2239/10; B01D 2239/1216;
B01D 2239/1233; B01D 2239/1241;
B01D 2239/1258; B01D 2239/1291; F24F 8/158

**Description**

FIELD OF TECHNIQUE

The present invention relates to a filtering device and a method for making it.

Filtering devices are known which are used to filter air flows, for example in ventilation ducts. These devices are generally used in order to remove fine particles from the air stream that could be harmful to humans or animals that breathe them, as well as bacteria and/or viruses and/or other microorganisms that could generate infections.

Generally these are made of soft materials, generally comprising layers of polymeric fibers made of non-woven fabric, i.e. in which the polymeric fibers are compacted together in order to generate a compact layer.

These layers have pores through which the air to be filtered passes, while the fibers retain the particulate and/or elements that need to be removed from the air stream.

However, the known solutions are not fully satisfactory since the lattice formed by the fibers tends to collapse, blocking the pores and consequently reducing the amount of air which can pass through the device itself. This in turn causes a difficulty in aerating, for example, the room which is served by the aeration duct in which the filtering device is located.

Furthermore, the known solutions do not have a sufficiently high antimicrobial efficacy, for example against pathogenic micro-organisms such as the influenza virus or others.

In order to evaluate the filtering efficiency of these devices, two values are commonly used, called $\gamma$ and $\beta$.

The value $\gamma$ is defined according to the following formula:

$$\gamma = -\log \frac{\frac{\text{MPPS penetration \%}}{100}}{\text{pressure drop}} \times 100$$

The $\beta$ value, on the other hand, is given by the number of particles of a particular size present upstream of the filter compared to those present downstream of the filter.

STATE OF THE ART

To remove dust, smog and particulates in general, as well as bacteria and/or other contaminants and pathogens present in the air, from an environment, and in particular from an air flow that circulates in said environment, filter elements are used which are generally positioned at the outlets of the ventilation systems of the rooms themselves.

EP 3 901 358 discloses a laminar product for producing a mask comprising fibers coated, at least partially and preferably completely, with nanoparticles.

WO 2020/164396 discloses a fibrous article and a method for making it. The product comprises a layer of polymeric nanofibers which are made by electro-spinning.

US 2020/0054976 discloses a filtering device for water and a method for making it, which provides for forming fibers of polymeric material by electrospinning.

KR 2021-0050993 describes a method for the realization by electrospinning of nanofibers of polymeric material to which to attach nanoparticles in order to realize an air filter to be used for example in automobile air conditioners.

WO 2012/149914 describes two-component filtration or absorption media comprising a carbon-based absorbent material (and in particular carbon black or soot) dispersed between fibers based on polymeric material (e.g. polypropylene, also with a polyethylene sheath).

However, all these solutions are not fully satisfactory since the fibers with which the material is made are not themselves an active part of the filtering material, but only perform mechanical functions of support and/or confinement. This boils down to a reduced filtering efficiency of the material per unit weight.

OBJECTS OF THE INVENTION

The object of the invention is to propose a filtering device which allows the drawbacks of the known solutions to be overcome.

Another object of the invention is to propose a filtering device which exploits the properties of innovative materials.

Another object of the invention is to propose a filtering device which has antibacterial and/or antiviral and/or antimicrobial properties.

Another object of the invention is to propose a filtering device which has a high $\gamma$ value, preferably higher than that of the devices according to the state of the art.

Another object of the invention is to propose a filtering device which has a high average size of the passage pores, preferably higher than that of the devices according to the state of the art.

Another object of the invention is to propose a filtering device which has an initial β ratio at 4 micron and a reduced 1.5 micron, preferably lower than that of the devices according to the state of the art.

Another object of the invention is to propose a filtering device which is more open, with less solidity than the devices according to the state of the art.

Another object of the invention is to propose a filtering device which has improved structural integrity with respect to the devices according to the state of the art.

Another object of the invention is to propose a filtering device which has a greater particle and aerosol filtration capacity for classes PM1 and PM2.5.

Another object of the invention is to propose a filtering device which is simple and economical to produce.

Another object of the invention is to propose a filtering device which is an alternative and/or an improvement on known devices.

SUMMARY OF THE INVENTION

All these objects, both individually and in any combination thereof, and others which will result from the following description are achieved, according to the invention, with a filtering device with the characteristics indicated in claim 1 and with a method according to claim 13.

DETAILED DESCRIPTION OF THE FIGURES

The present invention is hereinafter further clarified in some of its preferred embodiments shown for purely exemplifying and non-limiting purposes with reference to the attached drawings, in which:

figure 1     is a side sectional view of the filter device according to the invention in a first embodiment,
figure 2     shows it in lateral section in a second embodiment,
figure 3     shows it in lateral section in a third embodiment,
figure 4     shows a large-scale scanning electron microscopy image of an agglomerate of nanofibers 4 according to the invention,
figure 5     shows a scanning electron microscopy image of an agglomerate of nanofibers 4 according to the invention at an intermediate scale, and
figure 6     shows a small-scale scanning electron microscopy image of an agglomerate of nanofibers 4 according to the invention,

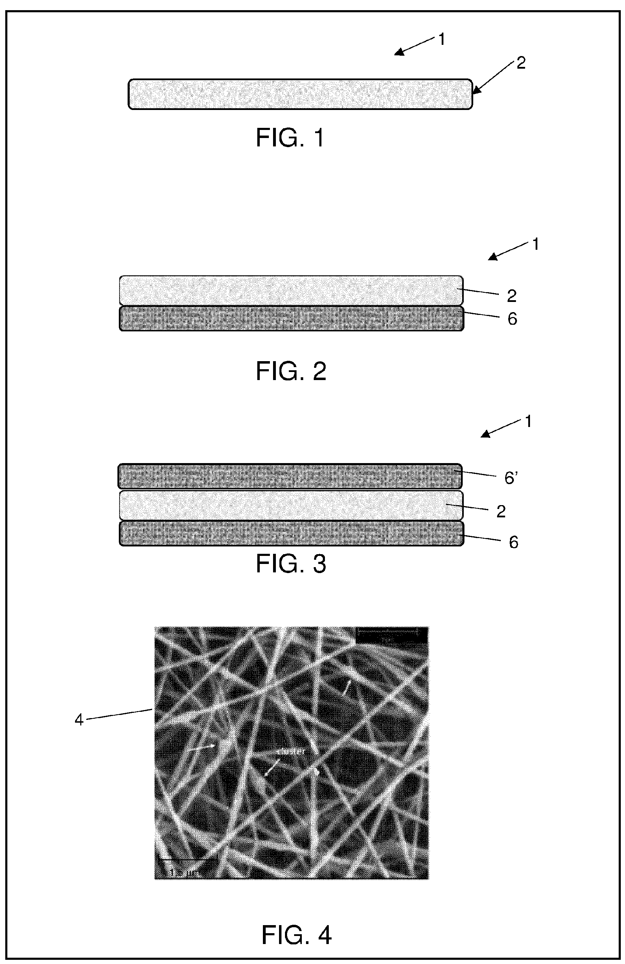

As is clear from figures 1 and 2, the device 1 according to the invention comprises at least a first layer 2 of filtering material.

Advantageously, the device 1 can have a substantially laminar shape, i.e. one of its dimensions i.e. the thickness can be much smaller than the other two, i.e. the length and the width (the dimensions shown in figs. 1 and 2 are not to scale).

Advantageously, the device 1 can be transpiring, i.e. it can allow the passage of gas, and in particular of air, from one side to the other.

FIRST LAYER 2

Conveniently said first layer 2 can be made of soft material, in order to be able to adapt to the position in which it is positioned, as will become apparent hereinafter.

Conveniently, the first layer 2 can be substantially transpiring, and, in particular, the material that makes up the first layer 2 can in turn be transpiring.

Advantageously, the filtering material of which the first layer 2 is composed can comprise nanoclusters of carbon-based material.

Advantageously by carbon-based material nanoclusters are meant agglomerations of predefined numbers of carbon atoms having a given, possibly non-regular, geometric shape. In particular, for example, said nanoclusters of carbon-based material can comprise a number of atoms and preferably a number of carbon atoms, equal to 38 or equal to 75, or equal to 101. Preferably the atoms can be positioned according to a substantially face-centered cubic lattice (*fcc*).

Conveniently, the nanoclusters of carbon-based material can have a substantially truncated octahedral or decahedral shape. In particular, if they are composed of 38 atoms they can have a truncated octahedral shape. In particular, if they are composed of 75 atoms they can have a decahedral shape, and preferably the shape of a Marks decahedron, and more preferably a Marks decahedron having values of *m, n,* and *p* equal respectively to 2, 2 and 2. In particular in the case in which they are composed of 101 atoms they can have a decahedral shape, and preferably the shape of a Marks decahedron, and more preferably a Marks decahedron having values of *m, n,* and *p* equal respectively to 2, 3 and 2. With values of *m, n,* and *p* we mean, in the traditional way, the parameters that describe the shape of the decahedron, and, in particular, with *m* we mean the dimension of the horizontal side - i.e. the one adjacent to the face (111) of the decahedron - of the face (100) of the decahedron, to the vertical side - i.e. the one adjacent to another face (100) of the decahedron - of the face (100) of the decahedron, and *p* is the so-called recess of Mark.

Preferably the carbon-based material nanoclusters may not comprise a number of atoms, and preferably a number of carbon atoms, equal to 55.

Suitably, the nanoclusters of carbon-based material can be aggregated into nanoparticles of carbon-based material, which therefore substantially constitute aggregates of nanoclusters of carbon-based material, and which can have a diameter substantially between 10 and 200 nm, as measured by transmission electron microscopy (TEM).

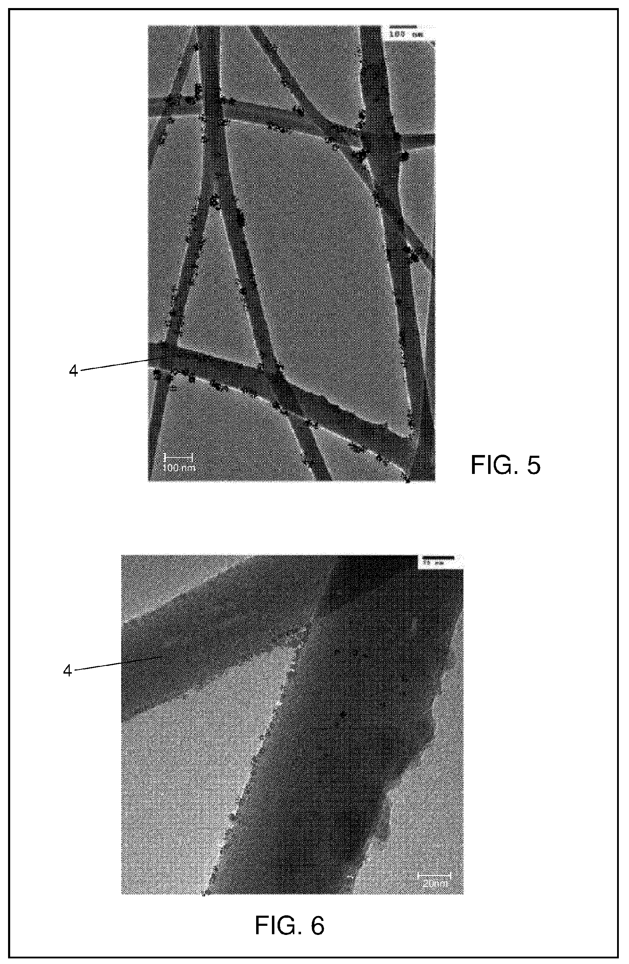

Advantageously, the carbon-based material nanoclusters, and in particular the carbon-based material nano-particles, can be organized so as to form substantially elongated aggregates, i.e. substantially nanofibers 4, as shown in fig. 3-5.

It is clear that the carbon-based material nanoclusters compose the nanofibers 4, with a portion, preferably <1% by weight, which can be found deposited on the surface of the fibers. This portion results from the normal imprecisions in the manufacturing method of the nanofibers 4, and, given the small amount, can be substantially neglected.

Advantageously therefore the nanofibers 4 of carbon-based material can have a polycrystalline and/or para-crystalline structure. In particular, therefore, the nanofibers 4 may not have long-term order, i.e. the nanoparticles of carbon-based material may aggregate in a substantially random manner. Suitably by "long range" is meant a characteristic distance which is greater, and preferably much greater than the dimensions of the object in question. In particular, in the case of nanoparticles of carbon-based material for example, "long range" means a distance greater than ten, and preferably greater than a hundred nanometers.

The nanofibers 4 of carbon-based material can expediently form an interconnected lattice, which preferably has no long-range order. In particular, in the case of nanofibers of carbon-based material for example, "long range" means a distance greater than a hundred nanometers, and preferably greater than a micron.

When a plurality of carbon-based material nanofibers 4 comprises a plurality of carbon-based material nanoclusters, the ratio between the average diameter of the nanofibers 4 and the average diameter of the material nanoclusters a carbon base can be between 1 and 100.

The ratio of the mean diameter of nanofibers 4 to the mean diameter of nanoparticles of carbon-based material can be determined by finding the mean diameter of nanofibers 4 and the mean diameter of nanoparticles of carbon-based material and then dividing the average diameter of the carbon-based material nanofibers 4 by the average diameter of the carbon-based material nanoparticles. In embodiments where more than one carbon-based material nano-fiber layer 4 is present, each carbon-based material nano-fiber layer 4 can independently have a ratio of the average nano-fiber diameter 4 of carbon-based material and the average diameter of the carbon-based material nanoparticles in one or more of the ranges described above.

Suitably the nanofibers 4 of carbon-based material comprise a percentage by weight ranging from 85% to 99% on the total weight of the nanofibers 4 of nano-particles of carbon-based material.

Advantageously said nanofibers 4 of carbon-based material can comprise, in addition to said nanoclusters and/or said nano-particles of carbon-based material, also a determined quantity of organic molecules. Conveniently said organic molecules can be present in a substantially isolated condition, or in the form of macro-molecules and/or polymers. It is clear that said amount of organic molecules, when these are present, is between 15 and 1% by weight of the total weight of the nanofibers.

When present, a layer of nanofibers 4 of carbon-based material can have a basis weight ranging from 0.05 $g/m^2$ to 10 $g/m^2$.

Conveniently, the first layer 2 can have a specific surface ranging from 1 $m^2/g$ to 100 $m^2/g$.

The specific surface area of said first layer 2, and in particular of the material formed by the nanofibers 4 of carbon-based material, can be determined in accordance with Section 10 of the Battery Council International Standard BCIS-03A (2009), "Recommended Battery Material Specification Valve Regulated Recombinant Batteries", Section 10 is "Standard Test Method for Surface Area of Separator Mat for Recombinant Batteries". Following this technique, the specific surface area is measured by adsorption analysis using an analyzer of BET surface area (e.g. Micromeritics Gemini III 2375 Surface Area Analyzer) with nitrogen gas; sample amount is 0.5 to 0.6 grams in a 3/4" tube; and the sample is left to degas at 100°C for a minimum of 3 hours.

Conveniently, the first layer 2 can have a thickness of between 0.5 micron and 250 micron.

The thickness of a layer of nanofibers 4 can be determined by scanning electron microscopy (SEM) in cross section.

Suitably the first layer 2, and in particular the material comprising nanofibers 4 of carbon-based material, can have an average flow pore size of from 0.05 micron to 25 micron.

The average flow pore size of a nano-fiber layer can be determined according to ASTM F316 (2003).

Suitably the first layer 2, and in particular the material comprising nanofibers 4 of carbon-based material can have a ratio between the maximum pore size and the average pore size of the largest flux of between 1.3 and 15.

The relationship between the maximum pore size and the average flow pore size of a nano-fiber 4 layer of carbon-based material can be determined by finding the maximum pore size and the average flow pore size according to ASTM F316 (2003) and then dividing the maximum pore size by the mean pore size of the flow.

When present, a nano-fiber layer 4 of carbon-based material has an air permeability of between 0.05 CFM and 10 CFM.

The air permeability of a layer of nanofibers 4 can be determined according to ASTM Test Standard D737-04 (2016) at a pressure of 125 Pa.

Suitably the first layer 2, and in particular the nano-fiber material 4 of carbon-based material can have a variety of suitable water permeabilities. The nano-fiber layer 4 has a water permeability of 0.05 mL / (min $\times$ cm$^2$ $\times$ psi) to 5 mL / (min $\times$ cm$^2$ $\times$ psi).

Water permeability can be determined by exposing a sample with an area of 4.8 cm$^2$ to deionized water at a constant pressure of 20 psi and collecting the water as it flows through.

When present, a nano-fiber layer 4 can have a variety of suitable water contact angles. The contact angle with water is between 5° and 175°.

The contact angle can be determined according to ASTM D5946 (2009).

The first layer 2, and especially the nano-fiber material 4 of carbon-based material can have antiviral properties against airborne viruses of 95% to 99%

Antiviral properties against airborne viruses can be determined according to ASTM Standard Practice E1052/20 for evaluating the activity of microbicides against airborne viruses.

The first layer 2, and in particular the carbon-based material nano-fiber material 4 can have antibacterial properties ranging from 96% to 99%.

Antibacterial properties can be determined according to ASTM E3160/18 Standard Test Method for Quantitative Evaluation of Antibacterial Properties of Porous Antibacterial Treated Articles.

The first layer 2, and especially the carbon-based material nano-fiber material 4 can have a variety of suitable filtering capabilities of aerosols and particulate matter of class PM1 (0.3 - 1 micron), PM2.5 (0.3 - 2.5 microns) and PM10 (0.3 - 10 microns). Preferably the first layer 2, and in particular the nano-fiber material 4 of carbon-based material, has an aerosol and particulate filtering capacity for the PM1 class (0.3 - 1 micron) between 90% and 95%, for class PM2.5 (0.3 - 2.5 micron) between 93% and 96% and for class PM10 (0.3 - 10 micron) between 97% and 100%.

Filtration capacity properties can be determined according to UNI EN ISO 16890/2017 technical specifications, requirements and the Particulate Efficiency Assessment System (ePM) for filter media.

The first layer 2, and in particular the nanofiber material 4 can have pressure drops between 50 and 80 Pascals.

The pressure drop properties can be determined according to UNI EN ISO 10339/1995 Characteristics Aeraulic systems for wellness purposes.

Conveniently, the first layer 2 can have a solidity of between 1% and 25% and with combinations of the aforementioned ranges.

The solidity is equivalent to the percentage of the first layer 2 occupied by solid material.

The method described in this paragraph includes determining the weight and thickness of the first layer 2 and then applying the following formula:

$$\text{solidity} = [\text{basic weight} / (\text{fiber density} * \text{thickness})] * 100\%.$$

The density of the nano-fiber 4 is equivalent to the average density of the material(s) forming the nano-fiber 4, which is typically specified by the manufacturer of the nano-fiber 4. The average density of the fiber-forming materials can be determined from: (1) determining the total volume of all the nanofibers 4 in the first layer 2; and (2) divide the total mass of all the fibers in the nano-fiber layer 4 by the total volume of all the nanofibers 4 in the first layer 2. If the mass and density of each type of nano-fiber are known 4 in the first layer 2, the volume of all the nanofibers 4 in the first layer 2 can be determined by: (1) for each fiber type, dividing the total mass of the nano-fiber type 4 in the layer by layer of nano -fibers 4 from the density of the nano-fiber type; and (2) adding up the volumes of each type of nano-fiber. If the mass and density of each type of fiber in nano-fiber layer 4 are not known, the volume of all fibers in nano-fiber layer 4 can be determined according to Archimedes' principle.

In the embodiments in which more than one layer 2 is present in the device 1, each first layer 2, and in particular the material of which they are made, can independently have properties in one or more of the ranges described above.

SECOND LAYER 6

In a second embodiment represented in Figure 2, the device 1 according to the invention can comprise, in addition to the first layer 2, also at least one second layer 6 configured to provide mechanical support to the first layer 2. The second layer 6 can conveniently be associated to the first layer 2, for example by means of an adhesive layer (not shown).

Advantageously, the second layer 6 can be positioned upstream of the first layer 2. Alternatively, the second layer 6 can be positioned downstream of the first layer 2. Preferably, the second layer 6 can be positioned substantially upstream of the first layer 2.

In an embodiment not shown, the device 1 can comprise a plurality of second layers 6 and/or a plurality of further second layers 6'. Conveniently in this embodiment the device can therefore provide a plurality of layers 2, 6, 6' interposed along the air flow to be filtered.

Conveniently also said at least one second layer 6 can be made of transpiring material.

In a third embodiment, the device 1 can comprise a further second layer 6', which for example can be substantially similar to the second layer 6. Conveniently, the further second layer 6' can be associated with the first layer 2 at the opposite surface with respect to that to which the second layer 6 is associated. In particular, therefore, the second layer can be associated with the surface of the first layer 2 which is downstream with respect to the air flow. Conveniently, the further second layer 6' can be associated with the first layer 2, for example by means of a further adhesive layer (not shown).

In one embodiment said second layer 6 and/or said further second layer 6' can be made of a material suitable for contributing to the filtering efficiency of the device 1. In an alternative embodiment said second layer 6 and said further second layer 6' can be made of a material which does not contribute to the filtering efficiency of the device 1.

Said second layer 6 and/or said further second layer 6' preferably comprise, and preferably are, compounds of non-woven fibers.

For example, said second layer 6 and/or said further second layer 6' may comprise wet non-woven fibers, a wet non-woven fiber web (such as, for example, a melt-blown non-woven fiber web, a carded non-woven fibers, or, more generally, a tape of non-woven fibers of the "spun bond" type, i.e. a fabric in which the fibers are stretched using compressed air and deposited randomly on the forming wire to form a web and subsequently bonded mechanically or thermally by needle punching machines or smooth or embossed calendering rollers), a sliver of non-woven fibers spun by electro-spinning or ultrasonic spinning and/or another type of sliver of non-woven fibers.

In the embodiments in which there is more than one second layer 6, and/or a further second layer 6', each support layer can be independently of one or more of the types described above.

In some embodiments, said second layer 6 and/or said further second layer 6' can be compressed. For example, said second layer 6 and/or said further second layer 6' may have been calendered, for example they may comprise a calendered meltblown layer, a calendered carded layer, a calendered spun bond layer and/or a wet calendered.

Calendering may involve, for example, compressing one or more layers using calender rolls under a particular linear pressure, temperature and line speed. For example, the linear pressure can be between 3 bar and 35 bar; the temperature can be between 20°C and 200°C; the speed of the line can be between 0.03 m/sec and 1 m/sec.

In embodiments where more than one second layer 6, 6' is present, each layer can be independently compressed at a linear pressure, temperature and/or line speed in one or more of the ranges described above.

In some embodiments, said second layer 6 and/or said further second layer 6' comprise a plurality of fibers comprising natural fibers (for example cellulose fibers). In some embodiments, said second layer 6 and/or said further second layer 6' comprise a plurality of fibers comprising synthetic fibers.

Synthetic fibers, if present, may include polymeric synthetic fibers, which may be mono-component and/or multi-component (e.g. bi-component synthetic fibers).

Non-limiting examples of suitable synthetic fibers include polyolefin fibers (e.g., propylene fibers), polyester fibers (e.g., poly-(butyl terephthalate) fibers, poly-(ethylene terephthalate) fibers, nylon fibers, poly-aramid, poly-(vinyl alcohol), poly-(ether sulfone), polyacrylic fibers (e.g., poly-(acrylonitrile) fibers, fluorinated polymer fibers (e.g., poly-(vinylidene difluoride) fibers) and cellulose acetate fibers. In some embodiments, said second layer 6 and/or said further second layer 6' comprise a plurality of fibers comprising glass fibers. In one embodiment said second layer 6 and/or said further second layer 6' comprise a mixture of said fibers. For example, they may comprise more than one type of fiber (for example, both glass fibers and synthetic fibers) or may include exclusively one type of fiber (for example, exclusively synthetic fibers of more than one subtypes, such as both fibers polyolefins and polyester fibers; or exclusively polypropylene fibers). In some embodiments, the plurality of fibers said second layer 6 and/or said further second layer 6' comprises fibers in turn comprising a blend of two or more and of the polymers listed above (e.g. a blend of nylon and polyester).

Advantageously cellulose fibers, the cellulose fibers contained therein can have an average diameter of between 1 micron and 100 micron.

Advantageously, the synthetic fibers can have an average diameter of between 0.01 micron and 50 micron.

Advantageously, the glass fibers contained therein can have an average diameter of between 0.1 micron and 25 micron.

The fibers present in said second layer 6 and/or said further second layer 6' can have an average length of between 0.1 mm and 125 mm.

In some embodiments, said second layer 6 and/or said further second layer 6' comprise continuous fibers, which can have an average length of the continuous fibers in a support and/or continuous layer can be between 50 mm and 1500 meters.

In one embodiment said second layer 6 and/or said further second layer 6' can comprise a binder resin, which can preferably be present in an amount between 0.1% and 5% on the weight of the layer 6, 6' weight.

Advantageously said second layer 6 and/or said further second layer 6' comprise has a solidity, i.e. the percentage of the support layer occupied by solid material, comprised between 1% and 50%.

When present, said second layer 6 and/or said further second layer 6' have a basis weight comprised between 10 $g/m^2$ and 500 $g/m^2$. The weight can advantageously be determined according to the ISO 536:2012 standard.

Advantageously said second layer 6 and/or said further second layer 6' have a specific surface area comprised between 0.1 $m^2/g$ and 100 $m^2/g$. Conveniently the specific surface area may be determined in accordance with Section 10 of the Battery Council (2009) International Standard BCIS-03A, *"Recommended Battery Material Specifications Valve Regulated Recombinant Batteries",* where Section 10 is *"Standard Test Method for Surface Area of Separator Mat for Recombinant Batteries".* Following this technique, specific surface area is measured by adsorption analysis using a BET surface area analyzer (e.g. Micromeritics Gemini III 2375 Surface Area Analyzer) with nitrogen gas; the sample quantity is between 0.5 and 0.6 grams in a 3/4" tube; and the sample is left to degas at 100°C for a minimum of 3 hours.

Advantageously, said second layer 6 and/or said further second layer 6' can have a variety of average pore sizes, determined according to the ASTM F316 (2003) standard, ranging from 0.1 micron to 800 micron.

Advantageously said second layer 6 and/or said further second layer 6' have an air permeability, determined according to ASTM Test Standard D737-04 (2016) at a pressure of 125 Pa, between 0.2 CFM and 2500 CFM.

Advantageously, said second layer 6 and/or said further second layer 6' have a dust holding capacity of between 100 $m^2/g$ and 1200 $m^2/g$.

The dust holding capacity is the difference between the weight of the filter material before exposure to a certain amount of fine dust and the weight of the filter material after exposure to the fine dust, upon reaching a particular pressure drop across the filter material, divided by the area of the filter medium. Dust holding ability can be determined with the aid of an ANSI / ASHRAE Standard 52.2-2012 flat plate test rig. A sample of layer 6, 6' with an area of 100 $cm^2$ can be exposed to the test dust at a rate of 15 fpm until the media pressure drop rises to 1.5 inches of $H_2O$ over a column.

At this point the weight of the captured dust can be divided by the area of the filter media to obtain the dust holding capacity. The test powder used may be SAE standard J726 72% test powder (fine) as described in ANSI/ASHRAE Standard 52.2-2012.

Conveniently in the embodiments in which there is a plurality of second layers 6 and/or further second layers 6', each second layer 6 and/or further second layer 6' can have characteristics included in the ranges described above, selected independently of the characteristics of the other second layers 6 and/or further second layers 6'.

FILTER DEVICE 1

In some embodiments, the filter device 1 according to the invention can be comprised in a filter apparatus (not shown). Non-limiting examples of suitable filter apparatuses include flat panel filters, V-bank filters (ranging, for example, between 1 and 24 V), cartridge filters, cylindrical filters, conical filters, and curved filters.

Filter media may be of any suitable height (e.g., between 2 inches and 124 inches for flat screen filters, between 4 inches and 124 inches for V-bank filters, between 2 cm and 350 cm for cartridges and cylindrical filter media).

The filter apparatuses may also be of any suitable width (between 1 cm and 350 cm for flat screen filters, between 5 cm and 350 cm for V-bank filters). Some filtering apparatuses (for example cartridge filtering apparatuses, cylindrical filtering apparatuses) may be characterized by a diameter instead of a width; these filtering apparatuses can have a diameter of any suitable value (e.g. between 2 cm and 300 cm). Filter apparatuses typically comprise a frame, which may consist of one or more materials such as cardboard, aluminum, steel, alloys, wood and polymers.

PRODUCTION METHOD

In a preferred embodiment, the first layer 2 can be made starting from a fluid precursor.

Conveniently, the nanoclusters of carbon-based material can be present within the fluid precursor. Conveniently these can already be present in the form of aggregates, i.e. in the form of nanoparticles of carbon-based material, or in the form of nanofibers 4, or in the form of disaggregated nanoclusters.

The precursor fluid can be a solution (e.g. a fluid in which a solvent dissolves one or more solutes), a dispersion or suspension (e.g. a fluid in which one or more particles are stably dispersed, and possibly comprising a solvent which dissolves a or more solutes) or other type of suitable fluid. The fluid precursor has a viscosity ranging from 100 cPs to 1250 cPs, and with combinations of the above ranges.

The viscosity of the fluid precursor can be determined by the use of a rotational viscometer at a shear rate of 1.7 s$^{-1}$ and a temperature of 20°C. The viscosity can be determined by the rotational viscometer once the value displayed on it has stabilized.

An example of a suitable rotational viscometer is a Brookfield LVT viscometer having a no. 62. In embodiments where more than one nano-fiber layer 4 is present, each nano-fiber layer 4 can be independently formed from a fluid precursor having a viscosity in one or more of the ranges described above.

Preferably, the first layer 2 of nanofibers 4 can be formed by electro-spinning and/or ultrasonic spinning by spinning the fluid precursor on a support to form a layer of nanofibers 4 arranged on the support itself.

In one embodiment said support can comprise, and preferably be constituted by, said second layer 6 or by said further second layer 6'.

EXAMPLES

EXAMPLE 1

This example describes the fabrication and testing of filter media comprising a first layer 2 comprising nanofibers 4 formed of Nylon 6 and nanoclusters of carbon-based material.

The first layer 2 was fabricated by electro-spinning a nano-fiber layer 4 from a precursor fluid comprising Nylon 6 and carbon-based material nanoclusters having a specific surface area of 300 m$^2$/g and an average diameter of 15 nm.The amounts of carbon-based material nanoclusters and Nylon 6 in each precursor fluid are listed below in Table 1.

TABLE 1

| Precursor Fluid No. | % by weight of Nylon 6 in the precursor fluid | Weight % of carbon-based material nanoclusters in the precursor fluids | Viscosity |
|---|---|---|---|
| 1 | 100 | 0 | 230 cPs |
| 2 | 20 | 80 | 280 cPs |

Each precursor fluid was electro-spun with a constant electric field and constant humidity on a support layer (second layer 6) made of non-woven fiber to form filter device samples 1 of variable weights comprising a first layer 2 of nanofibers 4 arranged on a second support layer 6.

Samples of each type of filter device 1 (for example, comprising nano-fiber layers 4 that include and do not include nanoclusters of carbon-based material) having substantially identical air permeability values were obtained and compared with each other. between them.

The mean diameter of the nanofibers 4 in each first layer 2 was measured using SEM (see Fig. 4-6), and the air permeability, the value of γ, the initial β ratio at 4 microns, the β ratio starting at 1.5 microns and the contact angle was measured as described elsewhere herein.

In particular, the value γ is defined according to the following formula:

$$\gamma = -\log \frac{\dfrac{\text{MPPS penetration \%}}{100}}{\text{pressure drop}} \times 100$$

In particular, the ratio β is given by the number of particles of a particular size present upstream of the filter compared to those present downstream of the filter.

The samples comprising a first nano-fiber layer 2 4 comprising carbon-based material nanoclusters outperformed the samples comprising a nano-fiber filter layer free of carbon-based material nanoclusters in various ways, such as summarized below in table 2. As can be seen from table 2 in fact, the sample comprising a first layer 2 of nanofibers 4 comprising nanoclusters of carbon-based material had a higher value y, an average pore size flow rate and higher initial β -ratio values at 4 microns and 1.5 microns than the sample that includes a nano-fiber filter layer 4 free of carbon-based material nanoclusters.

The greater average size of the passage pores of the samples which include a first layer 2 according to the invention is indicative of a more open filtering medium, with a lower solidity of the layer of nanofibers 4 inside it. The improved structural integrity of this nano-fiber layer 4 is likely the cause of the improved initial $\beta$ -ratio values.

TABLE 2

|  | Nano-fiber layer 4 formed by Sample No. 1 (0% nano-cluster of carbon-based material) | Nano-fiber layer 4 formed by Sample No. 2 (80% carbon-based material nano-cluster) |
|---|---|---|
| Average fiber diameter | 93 nm | 99 nm |
| Air permeability | 5 CFM | 5 CFM |
| yto the MPPS | 43 | 95 |
| Corner contact | 84th | 103 rd |
| Basic weight | 1.1 $g/m^2$ | 0.6 $g/m^2$ |
| Mean diameter of the passage pores | 0.4 microns | 0.6 microns |
| $\beta$ ratio at 4 microns | 1200 | 2500 |
| $\beta$ ratio at 1.5 microns | 170 | 1100 |

EXAMPLE 2

This example describes the fabrication and testing of devices 1 comprising a first layer 2 of nanofibers 4 comprising nanofibers 4 formed from polyester and nanoclusters of carbon-based material. Carbon-based material nanoclusters have been incorporated within the nanofibers 4.

The first nano-fiber layer 2 4 was fabricated by ultrasound by spinning a nano-fiber layer 4 from a precursor fluid comprising carbon-based material nanoclusters and a polyester-based precursor and having a specific surface area of 200 $m^2$/g and an average diameter of 25 nm.

The amounts of polyester and carbon-based material nanoclusters in each precursor fluid are listed below in Table 3.

TABLE 3

| Precursor fluid | Wt % Polyester in the precursor fluid | Wt % nanoclusters of carbon-based material in precursor fluids | Viscosity |
|---|---|---|---|
| 1 | 100 | 0 | 225 cPs |
| 2 | 10 | 90 | 277 cPs |

TABLE 4

|  | Nano-fiber layer 4 formed by Sample No. 1 (0% Carbon nanoclusters) | Nano-fiber layer 4 formed by Sample No. 2 (90% Carbon nanoclusters) |
|---|---|---|
| Average fiber diameter | 94 n | 98 n |
| Air permeability | 5.5CFM | 5.5CFM |
| yto the MPPS | 45 | 97 |
| Corner contact | 81st | 102nd |
| Basic weight | 1.2 $g/m^2$ | 0.6 $g/m^2$ |
| PM1 filter capacity | 55% | 90% |
| PM2.5 filter capacity | 65% | 95% |
| Mean diameter of the passage pores | 0.5 microns | 0.7 microns |

(continued)

|  | Nano-fiber layer 4 formed by Sample No. 1 (0% Carbon nanoclusters) | Nano-fiber layer 4 formed by Sample No. 2 (90% Carbon nanoclusters) |
|---|---|---|
| β ratio at 4 microns | 1000 | 2400 |
| β ratio at 1.5 microns | 175 | 1150 |

Each precursor fluid was ultrasonically spun at constant humidity onto a non-woven fiber web backing layer to form samples of filter devices 1 of varying weights including a nano-fiber layer 4 disposed on the backing layer.

Samples of each type of filter devices were obtained and compared with each other for example, including 4 nano-fiber layers comprising carbon-based material nanoclusters, and nanofibers not comprising carbon-based material nanoclusters having the same values of air permeability to each other.

The mean diameter of the fibers in each 4 nano-fiber layer was measured using SEM and the air permeability, the $\gamma$ ratio, the initial $\beta$ ratio at 4 microns, the initial $\beta$ ratio at 1.5 microns and the contact angle were measured as described elsewhere in this document.

The samples comprising a first layer 2 of nanofibers 4 including nanoclusters of carbon-based material outperformed the samples comprising a nanofibers layer 4 free of nanoclusters of carbon-based material in various ways, such as summarized below in Table 3.

As can be seen from table 3, also in this example, the sample comprising a first layer 2 comprising nanofibers 4 comprising nanoclusters of carbon-based material has a higher value of y, an average passage pore size which is more and higher initial $\beta$ -ratio values at 4 microns and 1.5 microns compared to the sample that included a nano-fiber layer free of carbon-based material nanoclusters.

Another feature of the nanofibers 4 including carbon-based material nanoclusters is the higher particle and aerosol filtration capacity for PM1 and PM2.5 classes, compared to the woven nano-fiber without material nanoclusters carbon based.

The greater average size of the passage pores of the first layers 2 according to the invention which include a layer of nanofibers 4 comprising nanoclusters of carbon-based material is indicative of a more open filtering device 1, with a lower solidity of the nano-fiber layer 4 inside it. The improved structural integrity of this nano-fiber layer 4 is likely the cause of the improved initial $\beta$ -ratio values.


EXAMPLE 3

This example describes the manufacture and testing of filter media comprising a first layer 2 of nanofibers 4, and in particular formed by polyester and nanoclusters of carbon-based material. Carbon-based material nanoclusters have been incorporated within the nanofibers 4.

The nano-fiber layer 4 was fabricated by ultrasound by spinning a nano-fiber layer 4 from a precursor fluid comprising a polyester-based precursor and carbon-based material nanoclusters having a specific surface area of 250 $m^2$/g and an average diameter of 25 nm.

The nano-fiber samples 4, for the evaluation of their antimicrobial characteristics, were contaminated with bacterial strains of Klebsiella pneumoniae - ATCC 4352 and with strains of Staphylococcus aureus - ATCC 6538

The nano-fiber samples 4, for the evaluation of their antiviral characteristics against airborne viruses, were contaminated with the H1N1 influenza virus strain.

The amounts of polyester and carbon-based material nanoclusters in each precursor fluid are listed below in Table 5.

TABLE 5

| Sample | Wt % Polyester in the precursor fluid | Wt % nanoclusters of carbon-based material in precursor fluids | Viscosity |
|---|---|---|---|
| 1 | 100 | 0 | 225 cPs |
| 2 | 10 | 90 | 275 cPs |

TABLE 6

|  | Nano-fiber layer 4 formed by sample #1 (0% nano-cluster of carbon-based material) | Nano-fiber layer 4 formed from sample No. 2 (90% carbon-based material nano-cluster) |
| --- | --- | --- |
| Average fiber diameter | 94 nm | 98 nm |
| Basic weight | 1.2 g/m$^2$ | 0.6 g/m$^2$ |
| Medium diameter flow pores | 0.5 microns | 0.7 microns |
| Total bacterial count | 22720 CFU | 5 CFU |
| Total airborne virus count | 2,185,421 HAU/ml | 35562 HAU/ml |

Each precursor fluid was ultrasonically spun at constant moisture onto a nonwoven fiber web backing layer to form filter media samples of varying weights including a nano-fiber layer 4 disposed on the backing layer.

The samples comprising a first layer 2 of nanofibers 4 including nanoclusters of carbon-based material outperformed the samples comprising a nanofibers layer 4 free of nanoclusters of carbon-based material in various ways, such as summarized above in Table 5.

In this example, the sample comprising a nano-fiber layer 4 comprising carbon-based material nanoclusters had higher antibacterial property and superior antiviral properties.

As is clear from what has been said, the filtering device according to the invention is particularly advantageous, indeed, optimal, in that:

- has a higher filtering efficiency than other filtering devices made according to the state of the art,
- it is simple and quick to manufacture,
- allows you to exploit the properties of innovative materials.

In particular, unlike the products mentioned in the previous patents EP 3 901 358, WO 2020/164396, US 2020/0054976, KR 2021-0050993, WO 2012/149914 the device according to the present invention comprises a first layer 2 which in turn comprises 4 nanofibers comprising nanoclusters of carbon-based material with *fcc* lattice. All the patents cited here simply envisage depositing carbon nanoparticles on fibers of polymeric material or fabric.

**Claims**

1. Filtering device (1), in particular for an air flow, comprising a first layer (2) comprising in turn fibers (4) of carbon-based material, and **characterized in that** said fibers comprise nanoclusters of material carbon-based having a face-centered cubic *(fcc)* type structure.

2. Device according to claim 1 **characterized by** the fact that said nanoclusters of carbon-based material:

    - comprise a number of atoms, and preferably a number of carbon atoms, equal to 38 or equal to 75, or equal to 101, and/or
    - they have a truncated octahedral or decahedral shape.

3. Device according to one or more of the preceding claims **characterized in that** said nanofibers (4) of carbon-based material comprise a percentage by weight ranging from 85% to 99% of the total weight of the nanofibers (4) of nanoparticles of carbon-based material.

4. Device according to one or more of the preceding claims **characterized in that** said nanofibers (4) of carbon-based material comprise a percentage of polymeric material ranging from 1 to 15% by weight.

5. Device according to one or more of the preceding claims **characterized in that** said first layer (2) has a thickness of between 0.5 micron and 250 micron.

6. Device according to one or more of the preceding claims **characterized in that** the ratio between the diameter of said nanofibers (4), of carbon-based material, and said nanoclusters of carbon-based material is between 1 and 100.

7. Device according to one or more of the preceding claims **characterized in that** said nanofibers (4) do not have long-range order.

8. Device according to one or more of the preceding claims **characterized in that** said nanofibers (4) of carbon-based material form a long-range interconnected lattice without order.

9. Device according to one or more of the preceding claims **characterized in that** said first layer (2) has an average flow pore size between 0.05 micron and 25 microns.

10. Device according to one or more of the preceding claims **characterized in that** it comprises at least a second layer (6), preferably in non-woven fabric material, positioned upstream of said first layer (2) with respect to the direction of advancement of the air flow to filter.

11. Device according to one or both of claims 10, 11 **characterized in that** it comprises a further second layer (6'), preferably in non-woven fabric material, positioned downstream of said first layer (2) with respect to the direction of advancement of the flow of air to be filtered.

12. Device according to the preceding claim **characterized in that** said second layer (6) and/or said further second layer (6') are associated with said first layer (2) by means of an adhesive layer.

13. Method for manufacturing a device (1) according to one or more of the preceding claims **characterized in that** said carbon-based material nanofibers (4) are prepared starting from a fluid precursor within which they are present in solution and/or in suspension said nanoclusters of carbon-based material and, preferably, at least one precursor of said polymeric material.

14. Method according to one or more of the preceding claims **characterized in that** said fluid precursor has a viscosity between 100cPs and 1250cPs.

15. Method according to the preceding claim, **characterized in that** the carbon-based material nanofibers are made by means of an electro-spinning or ultrasonic spinning process starting from said fluid precursor.

FIG. 1

FIG. 2

FIG. 3

FIG. 4

FIG. 5

FIG. 6

| | Europäisches Patentamt European Patent Office Office européen des brevets | EUROPEAN SEARCH REPORT | Application Number EP 22 20 9711 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 901 358 A1 (GAAP TECH OUE [EE]) 27 October 2021 (2021-10-27) * paragraphs [0001], [0016] − [0021], [0033], [0034], [0036] − [0040], [0045], [0048], [0049], [0055], [0068], [0070], [0081], [0087], [0088]; claims 1-6,8,11,12 * | 1-15 | INV. B01D39/20 B01D46/00 F24F8/108 F24F8/158 B01J20/20 B01J20/28 B01J20/30 |
| X | WO 2020/164396 A1 (FUNG WING CHIU [CN]) 20 August 2020 (2020-08-20) * page 1, paragraph 3 − page 4, paragraph 5 * | 1-15 | |
| X | US 2020/054976 A1 (JOHNSON JED [US] ET AL) 20 February 2020 (2020-02-20) * paragraphs [0003], [0004], [0006], [0016], [0027], [0035], [0042]; figure 1 * | 1-15 | |
| X | KR 2021 0050993 A (LG CHEMICAL LTD [KR]) 10 May 2021 (2021-05-10) * paragraphs [0001], [0004] − [0006], [0014], [0053] − [0058]; example 1 * | 1-15 | TECHNICAL FIELDS SEARCHED (IPC) |
| X | WO 2012/149914 A1 (ROYAL NATURAL MEDICINE S R O [CZ]; UNIV V LIBERCI TECCH [CZ] ET AL.) 8 November 2012 (2012-11-08) | 1-12 | B01D F24F G01N B01J |
| A | * page 1, line 26 − page 6, line 3 * | 13-15 | |
| A | JP 2018 021277 A (GUNZE KK) 8 February 2018 (2018-02-08) * the whole document * | 1-15 | |
| A | KR 2012 0097969 A (UNIV NAT CHONNAM IND FOUND [KR]) 5 September 2012 (2012-09-05) * paragraphs [0001], [0013] − [0016], [0018] − [0021], [0024], [0025], [0031], [0041] − [0043] * | 1-15 | |

The present search report has been drawn up for all claims

| Place of search | Date of completion of the search | Examiner |
|---|---|---|
| The Hague | 16 March 2023 | Howe, Patrick |

EPO FORM 1503 03.82 (P04C01)

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT
ON EUROPEAN PATENT APPLICATION NO.**

EP 22 20 9711

This annex lists the patent family members relating to the patent documents cited in the above-mentioned European search report.
The members are as contained in the European Patent Office EDP file on
The European Patent Office is in no way liable for these particulars which are merely given for the purpose of information.

16-03-2023

| Patent document cited in search report | | Publication date | Patent family member(s) | | Publication date |
|---|---|---|---|---|---|
| EP 3901358 | A1 | 27-10-2021 | EP 3901358 A1 | | 27-10-2021 |
| | | | IT 202000008734 A1 | | 23-10-2021 |
| WO 2020164396 | A1 | 20-08-2020 | CN 111569531 A | | 25-08-2020 |
| | | | WO 2020164396 A1 | | 20-08-2020 |
| US 2020054976 | A1 | 20-02-2020 | NONE | | |
| KR 20210050993 | A | 10-05-2021 | NONE | | |
| WO 2012149914 | A1 | 08-11-2012 | CZ 303268 B6 | | 04-07-2012 |
| | | | WO 2012149914 A1 | | 08-11-2012 |
| JP 2018021277 | A | 08-02-2018 | NONE | | |
| KR 20120097969 | A | 05-09-2012 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3901358 A
- WO 2020164396 A
- US 20200054976 A

- KR 20210050993
- WO 2012149914 A